(19) Europäisches Patentamt
European Patent Office
Office européen des brevets

(11) **EP 1 920 954 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
*B60H 1/00* (2006.01)      *B60H 1/32* (2006.01)
*F24F 11/00* (2006.01)      *F25B 49/02* (2006.01)
*G05D 7/06* (2006.01)      *F25B 5/02* (2006.01)

(21) Anmeldenummer: **07021979.5**

(22) Anmeldetag: **13.11.2007**

(54) **Verfahren zur Regelung einer Kraftfahrzeug-Klimaanlage mit mindestens zwei Verdampfern**

Method for regulating a motor vehicle air-conditioning system with at least two evaporators

Procédé de régulation d'une installation de climatisation de véhicule automobile dotée d'au moins deux évaporateurs

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.11.2006 DE 102006053674**

(43) Veröffentlichungstag der Anmeldung:
**14.05.2008 Patentblatt 2008/20**

(73) Patentinhaber:
• **Behr GmbH & Co. KG**
**70469 Stuttgart (DE)**
• **Bayerische Motoren Werke Aktiengesellschaft**
**80809 München (DE)**

(72) Erfinder:
• **Pitz, Eric**
**70199 Stuttgart (DE)**

• **Lochmahr, Karl**
**71665 Vaihingen/Enz (DE)**
• **Kemle, Andreas**
**74321 Bietigheim-Bissingen (DE)**
• **Baruschke, Wilhelm**
**73117 Wangen (DE)**

(74) Vertreter: **Grauel, Andreas**
**Grauel IP**
**Patentanwaltskanzlei**
**Presselstrasse 10**
**70191 Stuttgart (DE)**

(56) Entgegenhaltungen:
**EP-A- 1 462 281     US-A- 4 483 151**
**US-A- 6 126 080**

**Beschreibung**

Die Erfindung betrifft ein Verfahren zur Regelung einer Kraftfahrzeug-Klimaanlage mit mindestens zwei Verdampfern gemäß dem Oberbegriff des Anspruches 1.

Aus der DE 103 50 803 A1 ist ein Verfahren zur Regelung einer Kraftfahrzeug-Klimaanlage bekannt, wobei die Klimaanlage einen Kältemittel-Kreislauf mit mindestens zwei Verdampfern, einem Kondensator und einem Kältemittel-Verdichter aufweist. Hierbei ist für mindestens zwei Verdampfer eine gemeinsame Steuerung vorgesehen, wobei die Regelung über innere Verdampfertemperatur-Regelkreise erfolgt. Die einzelnen Verdampfer sind parallel zueinander geschaltet, wobei jeweils vor einem Verdampfer ein Expansionsventil vorgesehen ist. Die einzelnen Verdampfertemperatur-Regelkreise sind voneinander unabhängig und werden bevorzugt getrennt geregelt. Die Verdampfertemperaturregelung erfolgt bevorzugt mittels eines PI-Reglers. Der Verdichter ist extern regelbar und hat ein variables Hubvolumen. Dabei steuert das Regler-Ausgangssignal zur Regelung der Verdampfertemperatur, welches den höchsten Wert hat, den gemeinsamen Verdichter, welcher vorzugsweise mittels Pulsweitenmodulation gesteuert wird. Ein Beispiel einer Regelung, wie sie in der DE 103 50 803 A1 offenbart ist, ist in Fig. 5 dargestellt. Als Kältemittel ist im Kältemittel-Kreislauf R134a vorgesehen. Auf Grund der Eigenschaften von R744 ist dieses Kältemittel nicht für eine derartige Regelung geeignet.

Die US 6 126 080 offenbart ein Verfahren zur Regelung einer Klimaanlage gemäß Oberbegriff des Anspruchs 1 mit einem Kältemittel-Kreislauf, der mindestens zwei Verdampfer und diesen zugeordneten Expansionsorgane, wobei die Klimaanlage im Master-Slave-Betrieb betrieben wird, wobei ein Verdampfer der Master-Verdampfer mit zugeordnetem Master-Expansionsorgan und ein anderer Verdampfer der Slave-Verdampfer mit zugeordnetem Slave-Expansionsorgan ist, und die Regelung der Öffnung (Durchmesser $D_2$) des Slave-Expansionsorgans in Abhängigkeit von der Öffnung (Durchmesser $D_1$) des Master-Expansionsorgans erfolgt.

Ausgehend von diesem Stand der Technik ist es Aufgabe der Erfindung, ein verbessertes Verfahren zur Regelung zur Verfügung zu stellen, wobei dieses Verfahren insbesondere auch für einen Kältemittel-Kreislauf mit dem Kältemittel R744 geeignet ist.

Diese Aufgabe wird gelöst durch ein Verfahren zur Regelung einer Kraftfahrzeug-Klimaanlage mit mindestens zwei Verdampfern mit den Merkmalen des Anspruchs 1. Vorteilhafte Ausgestaltungen sind Gegenstand der Unteransprüche.

Erfindungsgemäß ist ein Verfahren zur Regelung einer Kraftfahrzeug-Klimaanlage mit einem Kältemittel-Kreislauf vorgesehen, der mindestens zwei Verdampfer, insbesondere bevorzugt genau zwei Verdampfer, und diesen jeweils zugeordneten Expansionsorgane, mindestens einen Gaskühler und mindestens einen Kältemittel-Verdichter aufweist. Hierbei wird die Klimaanlage im Master-Slave-Betrieb betrieben, wobei ein Verdampfer der Master-Verdampfer mit zugeordnetem Master-Expansionsorgan und ein anderer Verdampfer der Slave-Verdampfer mit zugeordnetem Slave-Expansionsorgan ist, und die Regelung der Öffnung des Slave-Expansionsorgans in Abhängigkeit von der Öffnung des Master-Expansionsorgans erfolgt. Üblicherweise sind die Öffnungen kreisförmig und so über ihren Durchmesser angegeben, jedoch kann an diese Stelle auch der hydraulisch gleichwertige Durchmesser einer nichtkreisförmigen Öffnung treten. Im Master-Slave-Betrieb ist hierbei (genau) ein Verdampfer der Master-Verdampfer und vorzugsweise der, gegebenenfalls auch die anderen Verdampfer sind Slave-Verdampfer, die geregelt in Abhängigkeit vom Master-Verdampfer betrieben werden. Im Falle eines reinen Master-Betriebs wird nur ein Verdampfer als Master-Verdampfer betrieben, die anderen Verdampfer sind in diesem Betriebszustand außer Betrieb, d.h. in nicht vom Kältemittel durchströmten Zweigen angeordnet. Im Kältemittel-Kreislauf strömt vorzugsweise R744 oder ein anderes geeignetes Kältemittel mit entsprechenden Eigenschaften. Als Master- und/oder Slaveexpansionsorgane können jeweils auch mehrere Expansionsorgane in Betracht kommen.

Die Festlegung der Öffnungsgrößen, die in Zusammenhang mit einem konstanten Kältemittel-Massenstrom stehen bezieht sich auf Mittelwerte, d.h. zur Veränderung der Öffnungsgrößen kann im Falle nicht variabel einstellbarer Öffnungen auch eine zeitlich veränderliche Öffnung vorgesehen sein, bspw. in Form eines getakteten Absperrventils, die im zeitlichen Mittel zum entsprechenden Kältemittel-Massenstrom führt.

Erfindungsgemäß ergibt sich die Öffnung des Slave-Expansionsorgans (oder der entsprechende Mittelwert im Falle einer getakteten Ausführungsform) aus der Gleichung:

$$D_2 = k * D_1 \sqrt{\frac{GL_2 * (TLVE_2 - TLVA_2)}{GL_1 * (TLVE_1 - TLVA_1)}}$$

wobei $k$ ein Korrekturfaktor ist, und $GL_1$ der Luftmassenstrom des Master-Verdampfers, $GL_2$ der Luftmassenstrom des Slave-Verdampfers, $TLVE_1$ die Lufteintrittstemperatur des Master-Verdampfers, $TLVE_2$ die Lufteintrittstemperatur des

Slave-Verdampfers, $TLVA_1$ die Luftaustrittstemperatur des Master-Verdampfers und $TLVA_2$ die Luftaustrittstemperatur des Slave-Verdampfers sind. Die einzelnen Größen für die Berechnung der Öffnung des Slave-Expansionsorgans lassen sich relativ einfach ermitteln. Der Korrekturfaktor k berücksichtigt empirische Größen und liegt typischer Weise zwischen 0,3 und 2. Im Idealfall ist k = 1.

Beim Master-Verdampfer handelt es sich vorzugsweise um den oder einen der Frontverdampfer, bei dem Slave-Verdampfer handelt es sich dagegen vorzugsweise um den oder einen Fond- bzw. Heckverdampfer.

Vorzugsweise ist eine feste Öffnung des Slave-Expansionsorgans in Verbindung mit einem getaktet verstellbaren Absperrventil vorgesehen, so dass sich der Kältemittelmassenstrom im Mittel regeln lässt. Das steuernde Bauteil im Slave-Zweig ist hierbei vorzugsweise als reines Absperrventil ausgebildet und daher kostengünstig darstellbar mit Vorteilen hinsichtlich Bauraum und Gewicht. Die bestimmenden Größen zur insbesondere bevorzugt pulsweitenmodulierten Steuerung des Absperrventils liegen im Klimasteuergerät standardmäßig vor (z. B. Luftmassenstrom-Informationen) und können ohne Zusatzaufwand abgerufen werden. Selbstverständlich sind auch hinsichtlich ihres Öffnungsgrades verstellbare Ventile verwendbar.

Im Folgenden wird die vorliegende Erfindung anhand zweier Ausführungsbeispiele unter Bezugnahme auf die Zeichnung näher erläutert. Es zeigen:

Fig.1     ein Blockschaltbild zur Regelung einer Zwei-Verdampfer-Klimaanlage mit R744 als Kältemittel gemäß dem ersten Ausführungsbeispiel,

Fig. 2    ein Blockschaltbild zur Regelung einer Zwei-Verdampfer-Klimaanlage mit R744 als Kältemittel gemäß dem zweiten Ausführungsbeispiel,

Fig. 3    eine PWM-Kennlinie, welche die Umsetzung des berechneten Expansionsorgan-Durchmessers in einem Tastverhältnis zur Ansteuerung eines Absperrventils in einem Slave-Verdampferkreis darstellt,

Fig. 4    eine PRCA-Kennline, welche den Durchmesser D1 am Master-Expansionsorgan über dem Kältemittelhochdruck zeigt, und

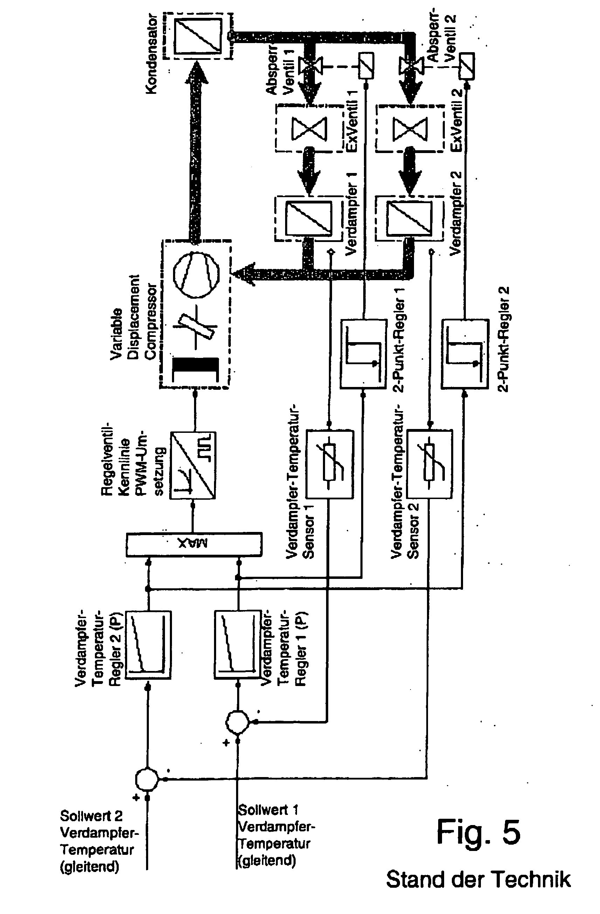

Fig. 5    eine herkömmliche Regelung einer Kraftfahrzeug-Klimaanlage mit R134a als Kältemittel.

Eine mehrzonige Klimaanlage 1 eines Kraftfahrzeugs weist gemäß dem ersten Ausführungsbeispiel einen Kältemittel-Kreislauf 2 mit R744 als Kältemittel auf, in welchem ein Verdichter 3, ein Gaskühler 4, ein innerer Wärmetauscher 5, ein erstes Expansionsorgan 6 mit einem Bypass, ein erster Verdampfer 7, im Folgenden auf Grund seiner Funktion auch als Master-Verdampfer bezeichnet, ein zweites Expansionsorgan 8 mit Absperrventil und ein zweiter Verdampfer 9, im Folgenden auch als Slave-Verdampfer bezeichnet, angeordnet sind. Hierbei sind die beiden Verdampfer 7 und 9 und die jeweils zugeordneten Expansionsorgane 6 und 8 in parallelen Zweigen des Kreislaufs 2 angeordnet.

Die Klimaanlage 1 kann sowohl im Master-Betrieb, d.h. der Master-Verdampfer wird betätigt und der hierzu parallel geschaltete Slave-Verdampfer ist außer Betrieb, als auch im Master-Slave-Betrieb, d.h. der Master-Verdampfer und der Slave-Verdampfer sind in Betrieb, betrieben werden. Beim Master-Verdampfer handelt es sich vorliegend um das Frontgerät und beim Slave-Verdampfer um das Fondgerät.

Die Regelung im Falle des Master-Betriebs ist relativ einfach und kann auf an sich bekannte Weise erfolgen, da in diesem Fall das gesamte vom Verdichter umgewälzte Kältemittel durch den Master-Verdampfer strömt, d.h. der Kältemittelmassenstrom im gesamten (aktiven) Kältemittel-Kreislauf konstant ist. Der Zweig, in welchem der Slave-Verdampfer angeordnet ist, wird in diesem Betriebszustand durch das Absperrventil des Expansionsorgans 8 vollständig abgesperrt.

Die Regelung im Falle des Master-Slave-Betriebs ist auf Grund des Erfordernisses der bedarfsangepassten Aufteilung des gesamten Kältemittelmassenstroms auf die beiden parallel angeordneten Zweige, in denen der Master-Verdampfer bzw. der Slave-Verdampfer angeordnet ist, hingegen deutlich komplizierter.

Die Steuerung des Slave-Expansionsorgans 8 im Slave-Zweig des Kältemittel-Kreislaufs 2 erfolgt vorliegend auf Basis eines Kennfelds. Hierbei erfolgt die Steuerung derart, dass vor den beiden Expansionsorgangen 6 und 8 im Kältemittel-Kreislauf jeweils näherungsweise der gleiche Druck und die gleiche Temperatur herrscht, und dass nach den beiden Expansionsorgangen 6 und 8 jeweils näherungsweise der gleiche Druck herrscht, d.h. der Druckabfall entsprechend ist.

Die ideale Aufteilung des Kältemittelmassenstroms $\dot{m}_{R1}$ (Master), $\dot{m}_{R2}$ (Slave) auf beide Verdampfer entspricht der Verteilung der Kälteleistung auf beide Verdampfer und ergibt sich aus der folgenden Gleichung:

$$\frac{\dot{m}_{R2}}{\dot{m}_{R1}} = \frac{GL_2 * c_p * (TLVE_2 - TLVA_2)}{GL_1 * c_p * (TLVE_1 - TLVA_1)} \qquad (1)$$

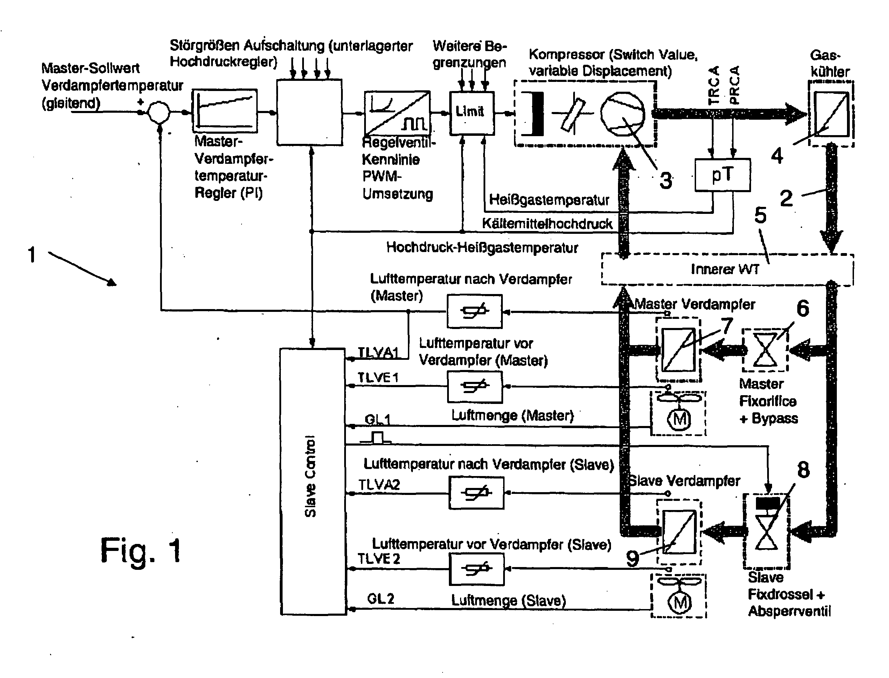

Hierbei sind, wie auch in Fig. 1, $GL_1$ der Luftmassenstrom des Master-Verdampfers, $GL_2$ der Luftmassenstrom des Slave-Verdampfers, $TLVE_1$ die Lufteintrittstemperatur des Master-Verdampfers, $TLVE_2$ die Lufteintrittstemperatur des Slave-Verdampfers, $TLVA_1$ die Luftaustrittstemperatur des Master-Verdampfers und $TLVA_2$ die Luftaustrittstemperatur des Slave-Verdampfers.

Der Einfluss der Luftfeuchtigkeit wird gemäß dem vorliegenden Ausführungsbeispiel vernachlässigt, kann aber gemäß einer nicht näher beschriebenen Variante mit berücksichtigt werden.

Da sich die Kältemittelmassenströme und durch die beiden Expansionsorgane 6 und 8 proportional zu den Drosselquerschnitten (Durchmesser $D_1$, $D_2$) verändern und $D_1$ des Master-Expansionsorgans 6, welches eine konstante Öffnung hat, zumindest unterhalb des Bypassöffnungsdrucks bekannt ist, kann die Gleichung (1) folgendermaßen umgeformt werden:

$$D_2 = k * D_1 \sqrt{\frac{GL_2 * (TLVE_2 - TLVA_2)}{GL_1 * (TLVE_1 - TLVA_1)}} \qquad (2)$$

Hierbei ist k ein Korrekturfaktor hinsichtlich weiterer Einflussgrößen, wie insbesondere Luftfeuchte, Fahrgeschwindigkeit, Sonneneinstrahlung, Zeitdauer des Fahrzeugstillstands bei laufendem Motor, Frischluft-/Umluftmodus.

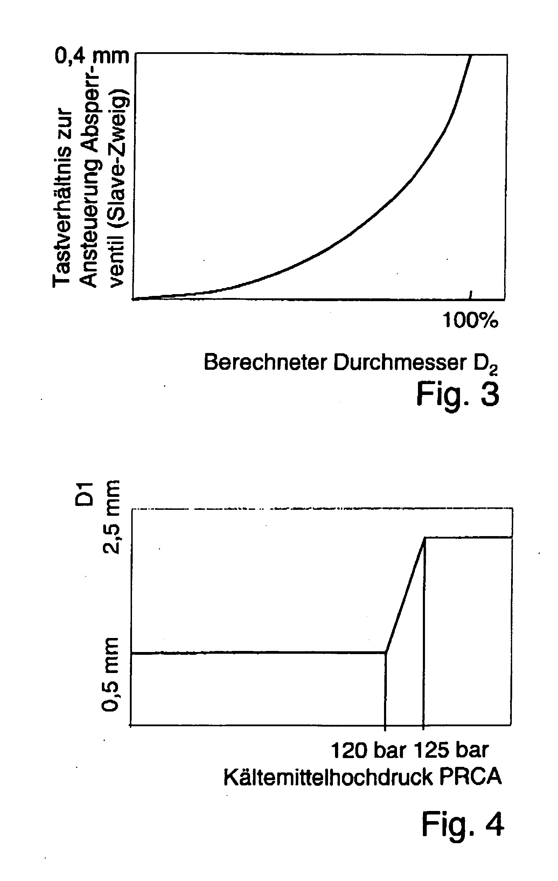

Der in Fig. 4 dargestellte Durchmesserverlauf des ersten Expansionsorgans in Abhängigkeit vom Kältemittelhochdruck PRCA, d.h. der Durchmesser $D_1$ des Master-Expansionsorgans 6 über dem Kältemittelhochdruck, wobei D1 ohne Bypass vorliegend 0,5 mm und D1 mit Bypass vorliegend 2,5 mm entspricht und der Bypass bei einem Druck von 115 bar bis 125 bar öffnet, ist erforderlich, um der Funktion des Master-Expansionsorgans (Fixorifice mit Bypass) gerecht zu werden. Der Bypass öffnet in Abhängigkeit vom Kältemittelhochdruck (PRCA). Entsprechend dem Durchmesserverlauf von Fig. 4 muss der Öffnungsgrad bzw. der pulsweitenmodulierte Betrieb des Slave-Absperrventils darauf angepasst werden.

In der Darstellung von Fig. 1 wird die beschriebene Funktion (Gleichung (2)) im Block "Slave Control" hinterlegt. Entsprechend des berechneten aktuellen Drosselquerschnitts (Durchmesser $D_2$) wird das Absperrventil des Slave-Expansionsorgangs 8 pulsweitenmoduliert gesteuert, um den erforderlichen mittleren Massenstrom durch den Slave-Verdampfer einzustellen. Die Umsetzung von $D_2$ in ein Tastverhältnis zur Ansteuerung des Absperrventils im Slave-Zweig erfolgt vorliegend entsprechend Kennlinie von Fig. 3. Die Systemdynamik erlaubt dabei sehr niedrige Taktfrequenzen, z. B. << 1 Hz.

Die Sensorik eines R744-Klimasystems mit zwei Verdampfern umfasst vorliegend zwei Luft(austritts)temperaturfühler, welche nach den Verdampfern 7 und 9 die Temperatur der die Verdampfer 7 und 9 durchströmenden Luft messen (Lufttemperaturen TLVA1 und TLVA2), einem Kältemittelhochdrucksensor zur Ermittlung des Kältemittelhochdrucks PRCA, d.h. des Kältemitteldrucks nach dem Verdichter, und einen Heißgassensor zur Ermittelung der Temperatur des Kältemittels nach dem Verdichter 3 (Kältemitteltemperatur TRCA), wobei der Kältemittelhochdrucksensor und der Heißgassensor ggf. auch als Kombisensor ausgebildet sein können. Die Lufteintrittstemperaturfühler, welche die Lufttemperaturen TLVE1 und TLVE2 am Lufteintritt der Verdampfer 7 und 9 ermitteln, sind in der Zeichnung zwar angedeutet, sind jedoch standardmäßig nicht vorhanden, da die Messwerte näherungsweise durch die Umgebungstemperatur (Außenluft-Modus) bzw. durch die Innenraum-Temperatur (Umluft-Modus) ersetzt werden können, und so wird auf einfache Weise eine ausreichend gute Regelung auch ohne die Lufteintrittstemperaturfühler erreicht. Somit erfordert die beschriebene R744-Klimaanlage mit zwei Verdampfern zumindest in der vereinfachten Ausführungsform keine zusätzliche Sensorik und ist daher kostengünstig. Für eine besonders gute und genaue Regelung können diese Temperaturfühler jedoch vorgesehen sein.

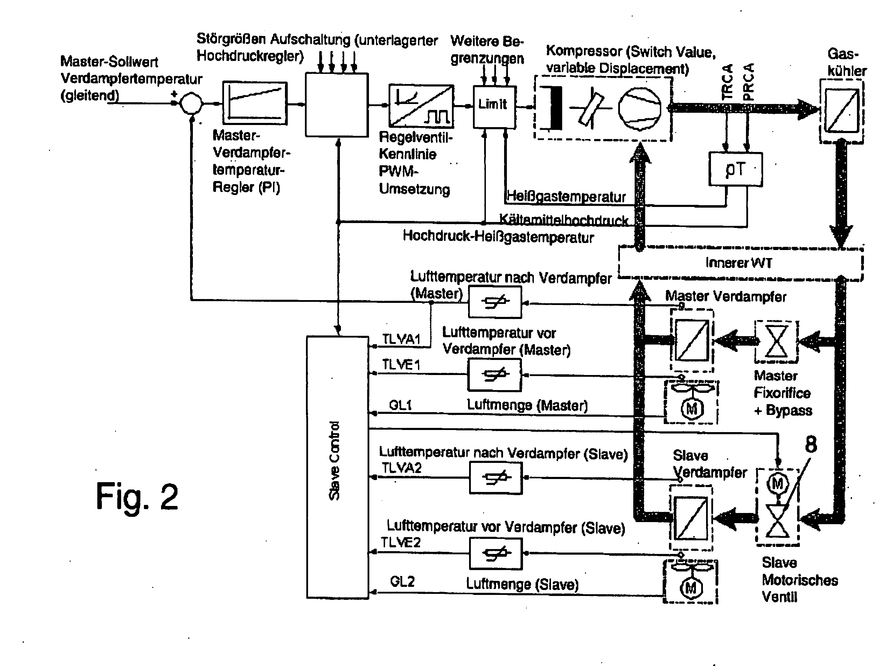

Die pulsweitenmodulierte Ansteuerung des Slave-Absperrventils beim Slave-Expansionsorgan 8, das zur Einstellung eines mittleren KältemittelMassenstroms dient, kann alternativ auch auf direkte Art und Weise erfolgen, bspw. mittels eines motorisch betätigten Expansionsventils 8, wie im in zweiten Ausführungsbeispiel von Fig. 2 schematisch dargestellt. Das bspw. als Schrittmotor-Ventil ausgeführte Expansionsorgan 8 ermöglicht eine kontinuierliche Einstellung des Öffnungsgrads einschließlich einer vollständigen Absperrung. Die weitere Ausgestaltung entspricht der des ersten Ausführungsbeispiels, so dass hierauf nicht näher eingegangen wird.

**Patentansprüche**

1. Verfahren zur Regelung einer Kraftfahrzeug-Klimaanlage (1) mit einem Kältemittel-Kreislauf (2), der mindestens zwei Verdampfer (7, 9) und diesen zugeordneten Expansionsorgane (6, 8), mindestens einen Gaskühler (4) und mindestens einen Kältemittel-Verdichter (3) aufweist, wobei die Klimaanlage (1) im Master-Slave-Betrieb betrieben wird, wobei ein Verdampfer (7) der Master-Verdampfer mit zugeordnetem Master-Expansionsorgan (6) und ein anderer Verdampfer (9) der Slave-Verdampfer mit zugeordnetem Slave-Expansionsorgan (8) ist, und die Regelung der Öffnung (Durchmesser $D_2$) des Slave-Expansionsorgans (8) in Abhängigkeit von der Öffnung (Durchmesser $D_1$) des Master-Expansionsorgans (6) erfolgt, **dadurch gekennzeichnet, dass** sich die Öffnung des Slave-Expansionsorgans (8) ergibt aus

$$D_2 = k * D_1 \sqrt{\frac{GL_2 * (TLVE_2 - TLVA_2)}{GL_1 * (TLVE_1 - TLVA_1)}}$$

wobei $k$ ein Korrekturfaktor hinsichtlich weiterer Einflussgrößen ist, und $GL_1$ der Luftmassenstrom des Master-Verdampfers, $GL_2$ der Luftmassenstrom des Slave-Verdampfers, $TLVE_1$ die Lufteintrittstemperatur des Master-Verdampfers, $TLVE_2$ die Lufteintrittstemperatur des Slave-Verdampfers, $TLVA_1$ die Luftaustrittstemperatur des Master-Verdampfers und $TLVA_2$ die Luftaustrittstemperatur des Slave-Verdampfers sind.

2. Verfahren nach Anspruch 1, **dadurch gekennzeichnet, dass** der Durchmesser D1 vom Kätemitteldruck nach dem Verdichter (3) abhängt, also gilt: $D_1$ = f (PRCA).

3. Verfahren nach einem der vorhergehenden Ansprüche, **dadurch gekennzeichnet, dass** der Master-Verdampfer (7) durch den oder einen der Frontverdampfer gebildet wird.

4. Verfahren nach einem der vorhergehenden Ansprüche, **dadurch gekennzeichnet, dass** genau zwei Verdampfer (7, 9) und jeweils ein dem entsprechenden Verdampfer (7, 9) zugeordnetes Expansionsorgan (6, 8) vorgesehen sind.

5. Verfahren nach einem der vorhergehenden Ansprüche, **dadurch gekennzeichnet, dass** eine feste Öffnung des Slave-Expansionsorgans (8) in Verbindung mit einem getaktet verstellbaren Absperrventil vorgesehen ist, so dass sich der Kältemittelmassenstrom im Mittel regeln lässt.

6. Klimaanlage **gekennzeichnet durch** eine Regelung nach einem der vorhergehenden Ansprüche.

7. Klimaanlage nach Anspruch 6, **dadurch gekennzeichnet, dass** ein innerer Wärmetauscher (5) vorgesehen ist, der nach dem Gaskühler (4) und vor der Verzweigung zu den mindestens zwei Verdampfern (7, 9) und nach der Zusammenführung der Kältemittel-Leitungen von den mindestens zwei Verdampfern (7, 9) und vor dem Kompressor (3) angeordnet ist.

8. Klimaanlage nach einem der Ansprüche 6 oder 7, **dadurch gekennzeichnet, dass** als im Kältemittel-Kreislauf (2) der Klimaanlage (1) das Kältemittel R744 vorgesehen ist.

9. Klimaanlage nach einem der Ansprüche 6 bis 8, **dadurch gekennzeichnet, dass** das Master-Expansionsorgan (6) einen Bypass aufweist.

**Claims**

1. A method for controlling a motor vehicle air conditioned (1) with a coolant cycle (2) having at least two vaporizers (7, 9) and expansion organs (6, 8) being assigned to the same, at least one gas cooler (4), and at least one coolant compressor (3), wherein the air conditioner (1) is operated in the master/slave mode, wherein one vaporizer (7) of the master vaporizers (9) is one with an assigned master expansion organ (6), and another vaporizer (9) of the slave vaporizers is one with an assigned slave expansion organ (8), and the controlling of the opening (diameter $D_2$) of the slave expansion organ (8) is carried out as a function of the opening (diameter $D_1$) of the master expansion organ (6), **characterized in that** the opening of the slave expansion organ (8) is arrived at from

$$D_2 = k * D_1 \sqrt{\frac{GL_2 * (TLVE_2 - TLVA_2)}{GL_1 * (TLVE_1 - TLVA_1)}}$$

wherein k is a correction factor with regard to further influencing values, and $GL_1$ is the air mass flow of the master vaporizer, $GL_2$ is the air mass flow of the slave vaporizer, $TLVE_1$ is the air inlet temperature of the master vaporizer, $TLVE_1$ is the air inlet temperature of the slave vaporizer, $TLVA_1$ is the air inlet temperature of the master vaporizer, and $TLVA_2$ is the air inlet temperature of the slave vaporizer.

2. The method according to claim 1, **characterized in that** the diameter $D_1$ depends on the coolant pressure after the compressor, therefore $D_1$ = f (PRCA).

3. The method according to one of the previous claims, **characterized in that** the master vaporizer (7) is formed by the front vaporizer, or by one of the front vaporizers.

4. The method according to one of the previous claims, **characterized in that** exactly two vaporizers (7, 9), and one expansion organ (6, 8) assigned to each of the vaporizers (7, 9) are provided.

5. The method according to one of the previous claims, **characterized in that** one firm opening of the slave expansion organ (8) in connection with a clocked, adjustable check valve is provided such that the coolant mass flow may be controlled within the coolant.

6. An air conditioner, **characterized by** a control device according to one of the previous claims.

7. The air conditioner according to claim 6, **characterized in that** an internal heat exchanger (5) is provided, which is disposed after the gas cooler (4) and in front of the branching toward the at least two vaporizers (7, 9), and after the junction of the coolant lines from the at least two vaporizers (7, 9), and in front of the compressor (3).

8. The air conditioner according to one of the claims 6 or 7, **characterized in that** the coolant R744 is provided in the coolant cycle (2) of the air conditioner (1).

9. The air conditioner according to one of the claims 6 to 8, **characterized in that** the master expansion organ (6) has a bypass.

**Revendications**

1. Procédé de régulation d'un système de climatisation (1) d'un véhicule automobile comprenant un circuit de fluide frigorigène (2) qui présente au moins deux évaporateurs (7, 9) et des détendeurs (6, 8) associés à ces évaporateurs, au moins un refroidisseur de gaz (4) et au moins un compresseur de fluide frigorigène (3), où le système de climatisation (1) est actionné en mode de fonctionnement maître/esclave, où un évaporateur (7) est l'évaporateur maître comportant un détendeur maître associé (6), et un autre évaporateur (9) est l'évaporateur asservi comportant un détendeur asservi associé (8), et la régulation de l'ouverture (diamètre $D_2$) du détendeur asservi (8) intervient en fonction de l'ouverture (diamètre $D_1$) du détendeur maître (6), **caractérisé en ce que** l'ouverture du détendeur asservi (8) résulte de l'équation:

$$D_2 = k * D_1 \sqrt{\frac{GL_2 * (TLVE_2 - TLVA_2)}{GL_1 * (TLVE_1 - TLVA_1)}}$$

où $k$ est un facteur de correction concernant d'autres variables d'influence, et $GL_1$ est le flux massique d'air de l'évaporateur maître, $GL_2$ est le flux massique d'air de l'évaporateur asservi, $TLVE_1$ est la température d'entrée d'air de l'évaporateur maître, $TLVE_2$ est la température d'entrée d'air de l'évaporateur asservi, $TLVA_1$ est la température de sortie d'air de l'évaporateur maître et $TLVA_2$ est la température de sortie d'air de l'évaporateur asservi.

**2.** Procédé selon la revendication 1, **caractérisé en ce que** le diamètre $D_1$ dépend de la pression de fluide frigorigène en aval du compresseur (3), diamètre dont l'équation applicable est donc: $D_1 = f(PRCA)$.

**3.** Procédé selon l'une ou l'autre des revendications précédentes, **caractérisé en ce que** l'évaporateur maître (7) est formé par l'évaporateur frontal ou par l'un des évaporateurs frontaux.

**4.** Procédé selon l'une quelconque des revendications précédentes, **caractérisé en ce qu'**il est prévu précisément deux évaporateurs (7, 9), un détendeur (6, 8) étant à chaque fois associé à l'évaporateur correspondant (7, 9).

**5.** Procédé selon l'une quelconque des revendications précédentes, **caractérisé en ce qu'**il est prévu une ouverture fixe du détendeur asservi (8) communiquant avec une soupape d'arrêt réglable de façon cadencée, de sorte que le flux massique de fluide frigorigène peut être réglé suivant une valeur moyenne.

**6.** Système de climatisation **caractérisé par** une régulation selon l'une quelconque des revendications précédentes.

**7.** Système de climatisation selon la revendication 6, **caractérisé en ce qu'**il est prévu un échangeur de chaleur intérieur (5) qui est disposé en aval du refroidisseur de gaz (4) et en amont de la bifurcation menant aux évaporateurs (7, 9) au moins au nombre de deux, et situé en aval du regroupement des conduites de fluide frigorigène des évaporateurs (7, 9) au moins au nombre de deux et en amont du compresseur (3).

**8.** Système de climatisation selon l'une des revendications 6 ou 7, **caractérisé en ce qu'**un fluide de type R744 est prévu comme fluide frigorigène dans le circuit de fluide frigorigène (2) du système de climatisation (1).

**9.** Système de climatisation selon l'une quelconque des revendications 6 à 8, **caractérisé en ce que** le détendeur maître (6) présente une dérivation.

Fig. 1

Fig. 2

Berechneter Durchmesser D$_2$

## Fig. 3

120 bar 125 bar

Kältemittelhochdruck PRCA

## Fig. 4

Fig. 5
Stand der Technik

Sollwert 2 Verdampfer-Temperatur (gleitend)

Sollwert 1 Verdampfer-Temperatur (gleitend)

Verdampfer-Temperatur-Regler 2 (P)

Verdampfer-Temperatur-Regler 1 (P)

MAX

Regelventil-Kennlinie PWM-Umsetzung

Variable Displacement Compressor

Kondensator

Verdampfer-Temperatur-Sensor 1

Verdampfer-Temperatur-Sensor 2

2-Punkt-Regler 1

2-Punkt-Regler 2

Verdampfer 1

Verdampfer 2

ExVentil 1

ExVentil 2

Absperr-Ventil 1

Absperr-Ventil 2

EP 1 920 954 B1

**IN DER BESCHREIBUNG AUFGEFÜHRTE DOKUMENTE**

**In der Beschreibung aufgeführte Patentdokumente**

- DE 10350803 A1
- US 6126080 A